# EUROPEAN PATENT SPECIFICATION

(11) **EP 0 669 952 B1**
(45) Date of publication and mention of the grant of the patent: **12.03.1997**
(21) Application number: 94900157.2
(22) Date of filing: 18.11.1993
(51) Int. Cl.: C08G 67/02

(54) **PREPARATION OF CARBON MONOXIDE POLYMERS**
HERSTELLUNG VON KOHLENMONOXIDPOLYMEREN
PREPARATION DE POLYMERES DE L'OXYDE DE CARBONE

(30) Priority: 20.11.1992 EP 92203588
(43) Date of publication of application: 06.09.1995
(73) Proprietor: SHELL INTERNATIONALE RESEARCH MAATSCHAPPIJ B.V., 2596 HR Den Haag (NL)
(72) Inventor: KLUSENER, Peter, Anton, August, NL-1031 CM Amsterdam (NL); STIL, Hans, Arie, NL-1031 CM Amsterdam (NL); VAN LEEUWEN, Petrus, Wilhelmus, Nicolaas, Maria, NL-3628 CA Kockengen (NL)
(86) International application number: PCT/EP93/03251
(87) International publication number: WO 94/12559

(56) References cited:
- EP-A- 0 300 583
- EP-A- 0 322 976
- EP-A- 0 379 260
- EP-A- 0 416 681
- EP-A- 0 460 743
- Römpp Chemie Lexikon, 9th ed., 1990, vol. 3, p. 1881

## Description

The invention relates to a process for the preparation of co-polymers of carbonmonoxide with one or more compounds containing an ethylenically unsaturated bond.

Linear co-polymers in which units originating from carbon monoxide substantially alternate with units originating from ethylenically unsaturated compounds, have been extensively described in the patent literature. Convenient methods for the preparation of these co-polymers are disclosed in, inter alia, EP 181014 and EP 248483.

In these, and similar, preparation methods the monomers, viz. carbon monoxide and one or more ethylenically unsaturated compounds, are contacted with a suitable catalyst, usually a catalyst system based on a metal of Group VIII of the Periodic Table.

The co-polymers obtained, typically having an average molecular weight, calculated as number average ($\overline{\text{M}}$ₙ), of more than 10.000, have established utility as thermoplastics. They may be processed by means of conventional techniques into films, sheets, plates, fibres, shaped articles such as containers for foods and drinks and parts for the car industry.

For obtaining co-polymers with optimal properties for the intended use, it is advantageous to minimize variations in the average molecular weight of the co-polymers produced. Therefore it would be desirable to perform the co-polymerization process under such conditions that the average molecular weight of the product can be controlled and substantially remains at the desired value.

For other uses than the above-mentioned outlets for thermoplastic products, it is preferred to apply products having considerably lower average molecular weights, e.g. of 2500 or lower. These products, viz. oligomers and low molecular weight co-polymers, may be used as such, or may be applied as starting materials for the preparation of other valuable products, e.g. as intermediates for the production of plastics, as blending components or as plasticizers for other polymers. It would therefore also be of advantage if the polymerization process could be carried out under such conditions that these co-polymers with lower molecular weight are predominantly formed.

It has already been proposed to subject the co-polymers with an average molecular weight of more than 10,000 to a fractionation treatment and to separate the low molecular fraction therefrom. This method has the disadvantage of being time-consuming and moreover the yield of the desired low molecular fraction is generally very low. It has further been proposed to increase the temperature at which the co-polymerization is carried out. Although the formation of products with lower molecular weight is thus enhanced, the stability of the catalyst system often becomes a problem.

The molecular weight of the co-polymers produced can also be reduced by addition of molecular hydrogen during the reaction. It has appeared, however, that with most catalyst systems a significant reduction in molecular weight only occurs by applying large amounts of hydrogen, say of 60 mol % or more, based on carbon monoxide. Apart from the unattractiveness of a high hydrogen consumption, the use of large quantities of hydrogen moreover often results in a reduction of the metal of Group VIII, accompanied by inactivation of the catalyst system. Only in exceptional cases, by selection of specific ligands in the catalyst system, the desired reduction in molecular weight of the co-polymers can be achieved, without impairing the activity of the catalyst system.

Surprisingly, it has now been found that an adequate control of the average molecular weight of the formed co-polymers is achieved and that also, if desired, products having a relatively low molecular weight may be prepared, when the co-polymerization reaction is carried out in the presence of a minor amount of certain compounds containing a hydride moiety.

The invention may be defined as relating to a process for the preparation of co-polymers of carbon monoxide and one or more ethylenically unsaturated compounds by contacting the monomers, under polymerization conditions, with a catalyst system comprising a) a source of cations of one or more metals of Group VIII of the Periodic Table and b) a bidentate ligand, in the additional presence of a compound containing a hydride moiety selected from hydrides of tin, germanium, lead and silicon, in an amount of from 10 to 10⁷ mol per gramatom of Group VIII metal.

Suitable compounds containing a hydride moiety include compounds comprising one or more hydrogen atoms, typically linked to a central metal or non-metal atom. Usually compounds are applied in which a single hydride group is present, but compounds comprising more than one hydride moiety per molecule are likewise suitable.

Preferred compounds containing a hydride moiety are silanes, such as SiH₄, aryl silanes such as diphenyl silane and triphenylsilane, alkylsilanes, such as trimethylsilane, triethylsilane, tripropylsilane, 1,1,1-trimethyldisilane, 1,1,2-trimethyldisilane, tris-(trimethylsilyl)silane and alkylarylsilanes such as dimethylphenylsilane and diphenylethylsilane. Most preferred are triarylsilanes, in particular triphenylsilane. Further examples of suitable compounds containing a hydride moiety are stannanes such as SnH₄, tributylstannane and triphenylstannane and germananes.

According to the invention a minor amount, as defined hereinbefore, of a compound containing a hydride moiety is provided. Although not wishing to be bound by any theory, it is believed that the said compound acts as a chain transfer agent and that, accordingly, the amounts applied are advantageously those generally applicable for other chain transfer agents. The presence of relatively large amounts of compounds containing a hydride moiety can be disadvantageous, as this may result in the reduction of the Group VIII metal and, consequently, in the inactivation of the catalyst. The preferred amount in which the compound containing a hydrogen moiety is applied, depends to a large extent on the desired molecular weight of the co-polymer produced.

For controlling the molecular weight of the co-polymers and minimizing any occurring variations of the molecular weight, small amounts of the compound containing a hydride moiety usually suffice, whereas for preparing co-polymers with a substantially reduced molecular weight applying otherwise the same reaction conditions, a somewhat higher amount may be required.

In practice, the amount is preferably in the range of 10² to 10⁵ mol per gramatom of Group VIII metal of the catalyst system.

The compound containing a hydride moiety may be supplied separately to the reactor. Conveniently it is supplied together with one or more of the other reactor components. If desired, part of the compound containing a hydride moiety may be initially supplied to the reactor, whilst the remaining part is added continuously, or in increments during the reaction.

The catalyst system used in the process of the invention comprises a source of cations of one or more metals of Group VIII, i.e. the group consisting of ruthenium, rhodium, palladium, osmium, iridium and platinium and the iron group metals, iron, cobalt and nickel. Preferably the Group VIII metal is selected from the group consisting of palladium, cobalt and nickel. In particular, good results are obtained with catalyst systems comprising a source of palladium cations. As source of Group VIII metal cations, preferably salts are used. Suitable salts include mineral salts such as sulphates, nitrates and phosphates. Other suitable salts are salts of sulphonic acids such as methylsulphonic acid, trifluoromethanesulphonic acid and p-toluenesulphonic acid.

Preferably a salt of a carboxylic acid is used, such as acetic acid, propionic acid, trifluoracetic acid, oxalic acid and citric acid.

In particular preferred sources of cations of Group VIII metals are the acetates of these metals.

As source of Group VIII metal-cations use may also be made of the metals in their elemental form, or in a zero-valent state thereof, e.g. in complex form, for example tetrakis(triphenylphosphine)palladium (0) These sources are generally applied in combination with a protic acid, thus yielding the metal cations in situ.

The catalyst system of the invention additionally comprises a bidentate ligand. i.e. a compound containing two sites which can form a complexing bond with the metal(s) of Group VIII. The two complexing sites are believed to contribute significantly to the formation of stable catalyst systems.

Preferred bidentate ligands can be indicated by the general formula

R¹R²-M¹-R-M²-R³R⁴ (I)

wherein M¹ and M² independently represent phosphorus, arsenic, antimony or nitrogen atoms, R¹,R²,R³ and R⁴ independently represent substituted or non-substituted hydrocarbylgroups and R represents a bivalent bridging group containing at least two atoms in the bridge.

In the ligands of formula (I) M¹ and M² preferably represent phosphorus atoms. R¹,R²,R³ and R⁴ may independently represent optionally substituted aryl, alkyl, alkaryl, aralkyl or cycloalkylgroups. Preferably at least one of R¹, R², R³ and R⁴ represents an arylgroup, in particular an arylgroup, substituted by one or more polar groups. Suitable polar groups include halogen atoms, such as fluorine or chlorine atoms, alkoxy groups such as methoxy- or ethoxygroups and (di)alkylaminogroups such as methylamino-, dimethylamino-, ethylamino- and diethylaminogroups.

If one or more of R¹, R², R³ and R⁴ represents an arylgroup, preference is given to a phenylgroup.

Preferably a substituted phenylgroup is present, whereby one or both orthopositions with respect to M¹ and/or M² are substituted with an alkoxygroup, preferably a methoxygroup.

Such alkoxy group substituted ligands may lead to increased polymerization rates as shown in the examples disclosed herein.

In the ligands of formula (I) R preferably represents a bivalent bridging group containing two to four bridging atoms, at least two of which are carbon atoms. Examples of suitable groups R are :
-CH₂-CH₂-;-CH₂-CH₂-CH₂-;-CH₂-Si(CH₃)₂-CH₂-;CH₂-CH₂-CH₂-CH₂- and -CH₂-C(CH₃)₂-CH₂-.

In addition to a source of cations of one or more metals of Group VIII and a bidentate ligand, the catalyst systems of the invention preferably comprise a source of anions. As suitable sources of anions, acids or salts thereof may be mentioned, in particular acids having a pKa of 4 or less, preferably of less than 2. Examples of suitable acids are mineral acids such as perchloric acid, sulphonic acids such as para-toluenesulphonic acid and methanesulphonic acid and halogen-carboxylic acids such as trifluoroacetic acid.

If desired, the source of anions can be combined with the source of cations of Group VIII metals and be provided as a single compound, such as a palladium-fluoroacetate, or nickel perchlorate.

The amount of catalyst used in the process of the invention may vary considerably. Advantageously an amount is applied in the range of 10⁻⁷ to 10⁻¹ gramatom of Group VIII metal(s) per mole of ethylenically unsaturated compound to be co-polymerized. Preferably the amount is in the range of 10⁻⁶ to 10⁻² on the same basis.

Ethylenically unsaturated compounds, suitable to be used as starting material, include unsaturated compounds consisting exclusively of carbon and hydrogen and compounds comprising in addition one or more hetero-atoms, such as oxygen or nitrogen atoms. Examples are unsaturated esters, such as methylacrylate and vinylacetate. Unsaturated hydrocarbons are, however, preferred. Suitable examples are the lower olefins, such as ethene, propene and 1-butene, cyclic olefins such as cyclopentene and aryl-substituted olefins such as styrene. Ethene and mixtures of ethene and propene are in particular preferred starting materials.

The molar ratio between the monomer reactants, viz. on the one hand carbon monoxide and on the other hand the ethylenically unsaturated compound(s) is advantageously selected in the range of 5:1 to 1:5, preferably in the range of 1.5:1 to 1:1.5, substantially equimolar amounts being most preferred.

The co-polymerization reaction is preferably carried out in the presence of a liquid diluent. Apolar as well as polar diluents are suitable, such as pentane or acetone. Preference is given to organic protic diluents, in particular to alcohols such as propanol-1 and methanol.

The reaction is generally performed at temperatures in the range of 20-150°C and at pressures in the range of 2-150 bar.

Preferred reaction temperatures are in the range of 30-130°C and preferred pressures are selected in the range of 5 to 100 bar.

The invention will be illustrated by the following, non-limiting examples.

### Example 1 (comparative)

A co-polymer of carbon monoxide and ethene was prepared as follows:

As reactor, a 250 mL mechanically stirred autoclave was used which was charged with 133 mL of methanol. In order to remove air from the reactor, the autoclave was pressurized with an equimolar ethene/carbon monoxide mixture to 40 bar, whereupon the pressure was released. This procedure was repeated twice. Subsequently, the temperature was raised to 85°C and an equimolar mixture of ethene and carbon monoxide was introduced until the pressure was 55 bar. Finally, a catalyst solution was supplied consisting of 0.020 mmol of palladium (II) acetate (1.8 mg Pd), 0.022 mmol of 1,3-bis(diphenylphosphino)propane (7.4 mg) and 0.045 mmol of p-toluenesulphonic acid (6.8 mg) in 7 mL of acetone.

After a reaction period of 1.5 hour the polymerization was terminated by cooling the reaction mixture to ambient temperature and by releasing the pressure. Solid product was filtered off and dried.

10.53 g Polymer was obtained, the average polymerization rate being 4.0 kg product per g palladium and per hour. The limiting viscosity number (LVN), measured in m-cresol at 60°C, was 0.88 dL/g, corresponding to an average molecular weight ($\overline{\text{M}}$ₙ) of 11,000.

### Example 2

A co-polymer of carbon monoxide and ethene was prepared, substantially as described in Example 1, with the following differences:
i) as reactor a 160 mL autoclave was used;
ii) the autoclave was charged with 78 mL of methanol, containing 2.2 g triphenylsilane;
iii) the reaction temperature was 87°C.

19.20 g Polymer was obtained, the average polymerization rate being 4.1 kg product per g palladium and per hour. The LVN, measured in m-cresol at 60°C was 0.34 dL/g, corresponding with an average molecular weight ($\overline{\text{M}}$ₙ) of 4000.

### Example 3 (comparative)

A co-polymer of carbon monoxide and ethene was prepared, substantially as described in Example 1 with the following differences:
i) the reaction temperature was 95°C;
ii) the reactor was charged with 171 ml of methanol;
iii) the catalyst solution comprised 2.0 mg of Pd, 8.2 mg of 1,3-bis(diphenylphosphino)propane and 8.2 mg of p-toluenesulphonic acid in 4 mL of acetone;
iv) The reaction period was 1.22 hour.

25.84 g Polymer was obtained, the average polymerization rate being 10.8 kg of product per g palladium and per hour. The average molecular weight, determined by end-group analysis with the aid of ¹³C NMR spectrometry, was 5900. The analysis showed that ethyl and ester end-groups had been formed.

### Example 4

A co-polymer of carbon monoxide and ethene was prepared, substantially as described in Example 3 with the following differences:
i) as reactor a 160 mL autoclave was used;
ii) the autoclave was charged with 88 mL of methanol, containing 0.29 g of triethylsilane;
iii) the catalyst solution comprised 2.0 mg of Pd, 8.1 mg of 1,3-bis(diphenylphosphino)propane and 8.6 mg of p-toluenesulphonic acid in 4 mL of acetone;
iv) The reaction period was 1.55 hour.

25.2 g Polymer was obtained, the average polymerization rate being 8.3 kg product per g palladium and per hour. The average molecular weight, determined by end-group analysis ⁽¹³C NMR) was 5000. The analysis moreover showed, that ethyl, ester and acetal end-groups had been formed.

### Example 5

A co-polymer of carbon monoxide and ethene was prepared, substantially as described in Example 4 with the following differences:
i) the autoclave was charged with 84 ml of methanol, containing 2.9 g of triethylsilane;
ii) the reaction period was 1.93 hour.

3.42 g Polymer was obtained, the average polymerization rate being 0.9 kg product per g palladium and per hour.

The average molecular weight, determined by end group analysis (¹³C NMR) was 1900. The analysis showed the presence of ethyl, ester and acetal end-groups.

### Example 6

A co-polymer of carbon monoxide and ethene was prepared, substantially as described in Example 3, with the following differences:
i) the catalyst solution contained 8.4 mg of p-toluene sulphonic acid instead of 8.2 mg;
ii) the autoclave was charged with 171 mL of methanol containing 4.2 g of triphenylsilane;
iii) the reaction period was 0.91 hour.
19.9 g Polymer was obtained, the average polymerization rate being 11.0 kg of product per g palladium and per hour. The average molecular weight ($\overline{\text{M}}$ₙ, determined by end-group analysis (¹³C NMR) was 1800. The analysis moreover showed that ethyl, ester and acetal end-groups had been formed.

When repeating this experiment with half, respectively double the amount of triphenylsilane, the polymer yields and polymerization rates were 16.2 g and 10.5 kg/g/hr, respectively 17.7 g and 9.7 kg/g/hr, whereas the average molecular weights ($\overline{\text{M}}$ₙ) were 2070, respectively 950.

When again repeating this experiment now using 10.9 mmol triphenylstannane instead of triphenylsilane and polymerizing during 1.45 hrs but otherwise under identical conditions the yield was 11.0 g, the polymerization rate was 5.8 kg/g/hr and the average mol. wt ($\overline{\text{M}}$ₙ) was 3860.

Of the above Examples, Examples 2, 4, 5 and 6 are according to the invention. Examples 1 and 3 have been included for comparison only.

As can be seen from the experiments described in Examples 1 and 2, addition of a compound containing a hydride moiety significantly reduces the molecular weight of the co-polymer produced.

From the experiments described in Examples 3, 4 and 5 it can be seen that adding a larger amount of the hydride containing compound results in a further decrease in molecular weight of the co-polymer obtained.

### Example 7

A copolymer of carbon monoxide and ethene was prepared as described in Example 3 with the following differences:
i) reaction temp.: 99 °C;
ii) reaction period: 0.70 hr;
iii) catalyst: 7 mg Pd, 0.010 mmol 1,3-bis(o-methoxydiphenylphosphino)propane, 0.022 mmol p-toluenesulphonic acid in 3 ml acetone;
iv) 15.7 mmol triphenylsilane in 150 ml methanol.

14.2 g Polymer was obtained, the polymerization rate was 21.1 kg/g/hr and the average mol. wt, ($\overline{\text{M}}$ₙ) was 5820.

When repeating this experiment under the same conditions apart from a) omission of added triphenylsilane and b) reaction period 1.5 hr, the polymer yield was 11.3 g, the pol. rate was 7.5 kg/g/hr and $\overline{\text{M}}$ₙ was 47480. It thus appears that with this catalyst system the presence of triphenylsilane markedly increases the polymerization rate. A similar effect is also found when substituting trifluoroacetic acid for p-toluenesulphonic acid as shown in following Example 8.

### Example 8

Example 7 is repeated under the same conditions apart from now adopting:
i) reaction temp.: 90 °C;
ii) reaction period 1.5 hr;
iii) catalyst 1 mg Pd, 0.010 mmol 1,3-bis(o-methoxydiphenylphosphino)propane, 0.029 mmol trifluoroacetic acid in 3 ml acetone.

Polymer yield was 14.2 g, polymerization rate was 19.1 kg/g/hr, $\overline{\text{M}}$ₙ was 8690. When repeating this experiment under the same conditions apart from now omitting triphenylsilane and polymerizing for 1 hr, the results were as follows: polymer yield 4.5 g, polymerization rate 8.7 kg/g/hr, $\overline{\text{M}}$ₙ 20430.

## Claims

1. A process for the preparation of co-polymers of carbon monoxide and one or more ethylenically unsaturated compounds by contacting the monomers, under polymerization conditions, with a catalyst system comprising a) a source of cations of one or more metals of Group VIII of the Periodic Table and b) a bidentate ligand, in the additional presence of a compound containing a hydride moiety, selected from hydrides of tin, germanium, lead and silicon, in an amount of from 10 to 10⁷ mol per gram atom of Group VIII metal.

2. A process as claimed in claim 1, characterized in that a silane is used as compound containing a hydride moiety.

3. A process as claimed in claim 1 or 2, characterized in that an arylsilane, in particular triphenylsilane is used.

4. A process as claimed in any of claims 1-3, characterized in that the amount in which the compound containing a hydride moiety is applied is in the range of 10² to 10⁵ mol per gramatom of Group VIII metal.

5. A process as claimed in any of claims 1-4, characterized in that a catalyst system is used comprising a source of palladium cations.

6. A process as claimed in any of claims 1-5, characterized in that a catalyst system is used comprising a bidentate ligand of the formula
R¹R²-M¹-R-M²-R³R⁴ (I)
wherein M¹ and M² independently represent phosphorus, arsenic, antimony, or nitrogen atoms, R¹,R²,R³ and R⁴ independently represent substituted or non-substituted hydrocarbyl groups and R represents a bivalent bridging group containing at least two atoms in the bridge.

7. A process as claimed in claim 6, characterized in that in the bidentate ligand of formula (I) at least one of R¹, R², R³ and R⁴ represents a phenylgroup substituted by a polar group, in particular an alkoxygroup, atone or both ortho positions with respect to M¹ or M².

8. A process as claimed in any of claims 1-7, characterized in that the catalyst system additionally comprises a source of anions being an acid having a pKa of less than 4 or a salt thereof.

9. A process as claimed in any one of claims 1 to 8, characterized in that as ethylenically unsaturated compound ethene, or a mixture of ethene and propene is used.

10. A process as claimed in any one of claims 1-9, characterized in that the co-polymerization is carried out at a temperature in the range of 30-130°C and at a pressure in the range of from 5 to 100 bar.

## Patentansprüche

1. Verfahren zur Herstellung von Copolymeren aus Kohlenmonoxid und einer oder mehreren ethylenisch ungesättigten Verbindungen, bei dem man die Monomere unter Polymerisationsbedingungen mit einem Katalysatorsystem, enthaltend a) eine Quelle von Kationen eines oder mehrerer Metalle der Gruppe VIII des Periodensystems und b) einen zweizähnigen Liganden, und zusätzlich in Gegenwart einer eine Hydridgruppierung enthaltenden Verbindung, die aus Zinn-, Germanium-, Blei- und Siliciumhydriden ausgewählt ist, in einer Menge von 10 bis 10⁷ mol pro Grammatom des Metalls der Gruppe VIII in Berührung bringt.

2. Verfahren nach Anspruch 1, dadurch gekennzeichnet, daß man als eine Hydridgruppierung enthaltende Verbindung ein Silan einsetzt.

3. Verfahren nach Anspruch 1 oder 2, dadurch gekennzeichnet, daß man ein Arylsilan, insbesondere Triphenylsilan, einsetzt.

4. Verfahren nach einem der Ansprüche 1-3, dadurch gekennzeichnet, daß man die eine Hydridgruppierung enthaltende Verbindung in einer Menge von 10² bis 10⁵ mol pro Grammatom des Metalls der Gruppe VIII einsetzt.

5. Verfahren nach einem der Ansprüche 1-4, dadurch gekennzeichnet, daß man ein Katalysatorsystem, das eine Quelle von Palladiumkationen enthält, einsetzt.

6. Verfahren nach einem der Ansprüche 1-5, dadurch gekennzeichnet, daß man ein Katalysatorsystem, das einen zweizähnigen Liganden der Formel
R¹R²-M¹-R-M²-R³R⁴ (I),
worin M¹ und M² unabhängig voneinander für Phosphor-, Arsen-, Antimon- oder Stickstoffatome, R¹, R², R³ und R⁴ unabhängig voneinander für gegebenenfalls substituierte Kohlenwasserstoffgruppen und R für eine zweiwertige Brückengruppe mit mindestens zwei Atomen in der Brücke stehen, enthält, einsetzt.

7. Verfahren nach Anspruch 6, dadurch gekennzeichnet, daß man einen zweizähnigen Liganden der Formel (I) einsetzt, bei dem mindestens eine der Gruppen R¹, R², R³ und R⁴ für eine Phenylgruppe steht, die an einer oder beiden ortho-Positionen bezüglich M¹ oder M² durch eine polare Gruppe, insbesondere eine Alkoxygruppe, substituiert ist.

8. Verfahren nach einem der Ansprüche 1-7, dadurch gekennzeichnet, daß das Katalysatorsystem zusätzlich eine Anionenquelle, bei der es sich um eine Säure mit einem pKa-Wert unter 4 oder ein Salz davon handelt, enthält.

9. Verfahren nach einem der Ansprüche 1 bis 8, dadurch gekennzeichnet, daß man als ethylenisch ungesättigte Verbindung Ethen oder ein Gemisch aus Ethen und Propen einsetzt.

10. Verfahren nach einem der Ansprüche 1-9, dadurch gekennzeichnet, daß man die Copolymerisation bei einer Temperatur im Bereich von 30-130°C und einem Druck von 5 bis 100 bar durchführt.

## Revendications

1. Procédé de préparation de copolymères du monoxyde de carbone et d'un ou plusieurs composés éthyléniquement insaturés, par la mise en contact des monomères, dans des conditions de polymérisation, avec un système catalytique comprenant a) une source de cations d'un ou plusieurs métaux du groupe VIII du tableau périodique, et b) un ligand bidentate, en la présence supplémentaire d'un composé contenant un groupement hydrure, choisi parmi les hydrures d'étain, de germanium, de plomb et de silicium, en une proportion de 10 à 10⁷ moles par atome-gramme de métal du groupe VIII.

2. Procédé suivant la revendication 1, caractérisé en ce que l'on utilise un silane à titre de composé contenant un groupement hydrure.

3. Procédé suivant la revendication 1 ou 2, caractérisé en ce que l'on utilise un arylsilane, en particulier, le triphénylsilane.

4. Procédé suivant l'une quelconque des revendications 1 à 3, caractérisé en ce que l'on applique le composé contenant un groupe hydrure dans la proportion de 10² à 10⁵ moles par atome-gramme de métal du groupe VIII.

5. Procédé suivant l'une quelconque des revendications 1 à 4, caractérisé en ce que l'on utilise un système catalytique qui comprend une source de cations palladium.

6. Procédé suivant l'une quelconque des revendications 1 à 5, caractérisé en ce que l'on utilise un système catalytique comprenant un ligand bidentate de la formule :
R¹R²-M¹-R-M²-R³R⁴ (I)
dans laquelle M¹ et M² représentent, chacun indépendamment, un atome de phosphore, d'arsenic, d'antimoine ou d'azote, les symboles R¹, R², R³ et R⁴ représentent, chacun indépendamment, un radical hydrocarbyle substitué ou non substitué, et R représente un groupe de pontage bivalent contenant au moins deux atomes dans le pont.

7. Procédé suivant la revendication 6, caractérisé en ce que, dans le ligand bidendate de la formule (I), au moins l'un des symboles R¹, R², R³ et R⁴ représente un groupe phényle substitué par un radical polaire, plus particulièrement un radical alcoxy, sur l'une ou les deux positions ortho par rapport à M¹ ou à M².

8. Procédé suivant l'une quelconque des revendications 1 à 7, caractérisé en ce que le système catalytique comprend complémentairement une source d'anions, qui est un acide possédant un pKa inférieur à 4 ou un sel de celui-ci.

9. Procédé suivant l'une quelconque des revendications 1 à 8, caractérisé en ce que, à titre de composé éthyléniquement insaturé, on utilise l'éthène, ou un mélange d'éthène et de propène.

10. Procédé suivant l'une quelconque des revendications 1 à 9, caractérisé en ce que l'on entreprend la copolymérisation à une température qui varie de 30 à 130°C et sous une pression qui fluctue de 5 à 100 bars.
